Europäisches Patentamt

(19) **European Patent Office**

Office européen des brevets

(11) Veröffentlichungsnummer: **0 037 967**
**B1**

(12) **EUROPÄISCHE PATENTSCHRIFT**

(45) Veröffentlichungstag der Patentschrift:
**19.09.84**

(51) Int. Cl.³: **G 11 B 5/30**, G 11 B 5/11

(21) Anmeldenummer: **81102470.2**

(22) Anmeldetag: **01.04.81**

(54) **Abgeschirmter magnetoresistiver Sensor zum Abtasten von Informationsspuren eines magnetischen Aufzeichnungsträgers.**

(30) Priorität: **15.04.80 DE 3014459**

(43) Veröffentlichungstag der Anmeldung:
**21.10.81 Patentblatt 81/42**

(45) Bekanntmachung des Hinweises auf die Patenterteilung:
**19.09.84 Patentblatt 84/38**

(84) Benannte Vertragsstaaten:
**AT BE CH FR GB IT LI LU NL SE**

(73) Patentinhaber: **Siemens Aktiengesellschaft, Berlin und München Wittelsbacherplatz 2, D-8000 München 2 (DE)**

(72) Erfinder: **Metzdorf, Werner, Dipl.-Phys., Franz-Schubert-Strasse 8, D-8025 Unterhaching (DE)**

(56) Entgegenhaltungen:
**US - A - 3 813 766**
**US - A - 3 881 190**
**US - A - 4 047 236**
**US - A - 4 071 868**

**PATENTS ABSTRACTS OF JAPAN, Band 2, Nr. 13, 28. Januar 1978, Seite 10747E77**
**IBM TECHNICAL DISCLOSURE BULLETIN, Band 21, Nr. 7, Dezember 1978, Seite 2716 Armonk, N.Y., U.S.A. G.F. PENNELL et al.: "Flux extender for magnetoresistive head"**
**PATENTS ABSTRACTS OF JAPAN, Band 2, Nr. 37, 13. März 1978, Seite 83E78**
**IEEE TRANSACTIONS ON MAGNETICS, Band MAG-12, Nr. 6, November 1976, Seiten 716-718 New York, U.S.A. J.C. V. LIER et al.: "Combined thin film magnetoresistive read, inductive write heads"**

## Beschreibung

Die Erfindung bezieht sich auf einen abgeschirmten magnetoresistiven Sensor nach dem Oberbegriff des Anspruchs 1.

Ein abgeschirmter magnetoresistiver Sensor ist aus den IEEE Transactions on Magnetics, Vol. MAG-12, No. 6, Nov. 1976, S. 716–718, insbesondere S. 717, Fig. 5 bekannt. Dieser weist die Nachteile auf, daß er durch die abzutastenden Magnetflüsse, die von den Informationsspuren allgemein verwendeter magnetischer Aufzeichnungsträger herrühren, sehr leicht übersteuert wird. Um dem zu begegnen, wäre es an sich möglich, die Informationsspuren mit einer geringeren Aussteuerung der Schreibköpfe aufzubringen, nur würde das zu einem ungünstigen Signal-Rausch-Verhältnis beim Abtasten der Spuren führen. Als JP-A-52 130 614 ist eine Vorrichtung nach dem Oberbegriff des Anspruchs 1 bekannt. Durch den dort vorgesehenen Abstand des Streifens von der Informationsspur ist die Gefahr der Übersteuerung verringert.

Der Erfindung liegt die Aufgabe zugrunde, einen magnetoresistiven Sensor an die von den Informationsspuren üblicherweise zur Verfügung gestellten Magnetflüsse anzupassen, ohne hierdurch das Signal-Rausch-Verhältnis des ausgelesenen Sensorsignals zu beeinträchtigen. Ausgehend von einem abgeschirmten magnetoresistiven Sensor der eingangs genannten Art wird diese Aufgabe durch die im Anspruch 1 gekennzeichneten Merkmale gelöst.

Der mit der Erfindung erzielbare Vorteil besteht insbesondere darin, daß von dem magnetoresistiven Sensor ein optimales Lesesignal abgegeben wird, ohne daß eine Gefahr der Übersteuerung des Sensors besteht. Das Signal-Rausch-Verhältnis wird durch die Maßnahmen nach der Erfindung nicht verschlechtert. Damit kann der erfindungsgemäße Sensor ohne Anpassungsschwierigkeiten zur Abtastung von Informationsspuren herangezogen werden, die sonst mit induktiven Leseköpfen abgetatet werden müßten.

Die Ansprüche 2 bis 4 sind auf vorteilhafte Weiterbildungen der Erfindung gerichtet.

Die Erfindung wird nachfolgend an Hand der Zeichnung näher erläutert. Dabei zeigt

Fig. 1 einen abgeschirmten magnetoresistiven Sensor und

Fig. 2 ein Ausführungsbeispiel der Erfindung.

Ein bandförmiger magnetischer Aufzeichnungsträger 1, der Informationsspuren 2, 3 aufweist, wird in Richtung des Pfeils 4 an einer ortsfesten Anordnung vorbeibewegt, die aus einem Streifen 5 aus magnetoresistivem Material und zwei ferromagnetischen Abschirmplatten 6, 7 besteht. Die Informationsspuren 2, 3 sind abschnittsweise entgegengesetzt magnetisiert, wie an Hand der Abschnitte 8 bis 10 der Spur 2 und der eingezeichneten Magnetisierungspfeile M1 bis M3 angedeutet ist. Auf Grund dieser in Längsrichtung der Spur 2 orientierten Magnetisierung treten aus der Spur 2 Magnetflüsse aus.

Bei einer Bewegung des Aufzeichnungsträgers 1 in Richtung 4 wird der Streifen 5 jeweils mit der Differenz zweier solcher Magnetflüsse beaufschlagt, die entsprechend der in der Spur 2 gespeicherten Information unterschiedlich groß sind, wobei sich der eine Magnetfluß über den Spalt zwischen den Teilen 5 und 6 und der andere Magnetfluß sich über den Spalt zwischen den Teilen 6 und 7 schließt.

Der magnetoresistive Streifen 5 besteht beispielsweise aus einer Ni-Fe-Legierung mit 81 bis 84% Ni und 16 bis 19% Fe.

Er ist über elektrische Leitungen 11, 12 mit den Anschlüssen 13, 14 einer konstanten Stromquelle verbunden, die einen Strom i liefert. Der Streifen 5 ist ferner mit einer Mehrzahl von schraffiert eingezeichneten, zueinander parallelen Leiterbahnen 15 versehen, die zu seiner in Richtung der Leitungen 11, 12 zu denkenden Längsachse etwa unter einem Winkel von 45° verlaufen. Die Leiterbahnen 15, die in der englischsprachigen Fachliteratur auch als »barber poles« bezeichnet werden, bestehen aus einem elektrisch gut leitenden Material, z. B. aus Gold. Der Strom i durchfließt die einzelnen Leiterbahnen 15 und bildet zwischen denselben Strompfade, die senkrecht zu den Rändern der Leiterbahnen 15 aus- bzw. eintreten. Damit ergibt sich im Streifen 5 eine senkrecht zu den Rändern von 15 orientierte Stromrichtung. Ist der Streifen 5 nun zusätzlich mit einer in Richtung seiner Längsachse orientierten Magnetisierung M' versehen, so wird diese in Abhängigkeit von der Richtung und Größe der aus der Informationsspur 2 jeweils austretenden Magnetflüsse $\varPhi 1$, $\varPhi 2$ gedreht, wobei an endseitig mit dem Streifen 5 verbundenen Anschlüssen 16 eine das Sensorsignal bildende Spannung $u_s$ abgreifbar ist. Die Größe $u_s$ hängt vom Winkel ab, der von der sich ergebenden Magnetisierungsrichtung und der durch die Leiterbahnen 15 bestimmten Stromrichtung eingeschlossen wird.

Der Magnetisierung M', die bei der Herstellung des Streifens 5 aufgebracht wird, überlagert sich die in Richtung der Längsachse des Streifens 5 liegende Komponente des von dem mittels der Leiterbahnen 15 abgelenkten Strom i in dem Streifen 5 erzeugten, inneren Magnetfeldes, wie in den IEEE Transactions on Magnetics, Vol. MAG-13, No. 5, Sept. 1977 auf den Seiten 1466–1468 beschrieben ist.

Wenn der Streifen 5 nicht mit Leiterbahnen 15 versehen ist, ist es zweckmäßig, ein äußeres Magnetfeld vorzusehen, das senkrecht zur Richtung der Magnetisierung M' orientiert ist. Hierdurch wird die Magnetisierung M' aus der Richtung der Längsachse des Streifens 5 und damit aus der Stromrichtung im Streifen 5 um einen Winkel gedreht, der z. B. 45° beträgt. Dieser Winkel ändert sich dann entsprechend der informationsabhängigen Magnetflüsse, die aus der Informationsspur aufgenommen werden.

Die ferromagnetischen Abschirmplatten 6, 7, die z. B. aus Permalloy bestehen, begrenzen zwischen sich einen den Streifen 5 aufnehmenden Spalt. Dabei liegt der Streifen 5 mit seiner Unterkante um einen Abstand $d_1$ oberhalb der unteren Begrenzungsfläche der Abschirmplatten 6, 7, die der Oberfläche der Informationsspur 2 möglichst weitgehend angenähert ist. Der hier verbleibende Abstand d2 ist durch die Rauhigkeit des Aufzeichnungsträgers 1 oder, z. B. bei einem Plattenspeicher, bei dem der Informationsträger 2 aus einer Magnetplatte besteht, durch die Flughöhe des Sensors über der Plattenoberfläche bedingt. Die Länge des Streifens 5, der die Breite der Abschirmplatten 6, 7 angepaßt ist, entspricht hierbei der Breite der Informationsspur 2. Die Abschirmplatten können durch einen den Spalt abschließenden Steg 17 aus ferromagnetischem Material, der gestrichelt eingezeichnet ist, miteinander verbunden sein.

Die Differenz der in der Informationsspur 2 vorhandenen Magnetflüsse $\phi 1$ und $\phi 2$, die den von den Teilen 5 und 6 sowie den Teilen 5 und 7 zwischen sich begrenzten Teilspalten gegenüberliegen, wird dem Streifen 5 zugeführt. Nimmt man eine Sättigungsinduktion des Streifens 5 von $10^{-4}$ $Vs/cm^2$ an, so ergibt sich bei einer Streifendicke von 30 nm und einer der Spurbreite von 2 angepaßten Länge von 30 µm ungefähr ein maximal aufnehmbarer Magnetfluß von $3 \times 10^{-12}$ Vs. Der Abstand d1, um den der Streifen 5 gegenüber der Grenzfläche der Abschirmplatten 6, 7 zurückversetzt ist, ist nun so zu wählen, daß der von der Informationsspur 2 gelieferte, den Streifen 5 beaufschlagende resultierende Magnetfluß, soweit er über den maximal aufnehmbaren Wert von z. B. $3 \times 10^{-12}$ Vs hinausgeht, zwischen den Abschirmplatten 6, 7 kurzgeschlossen wird.

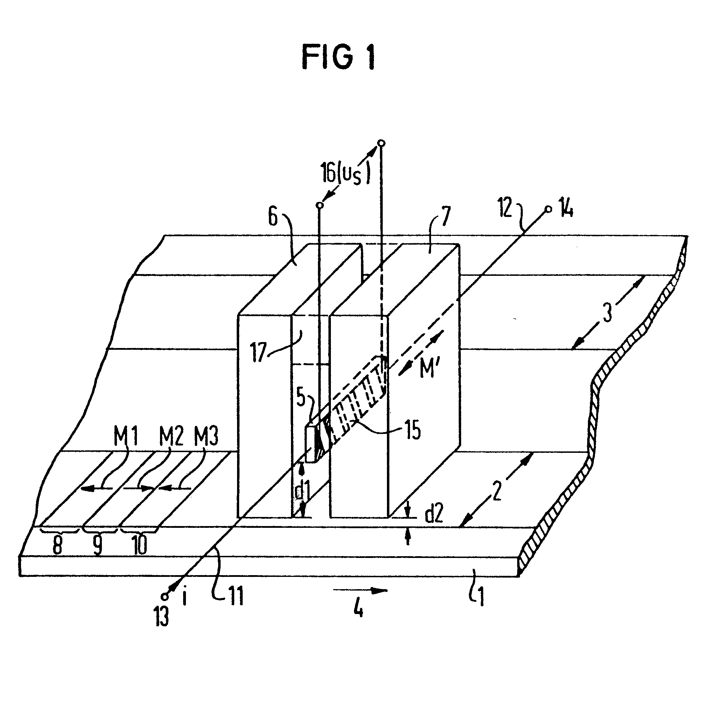

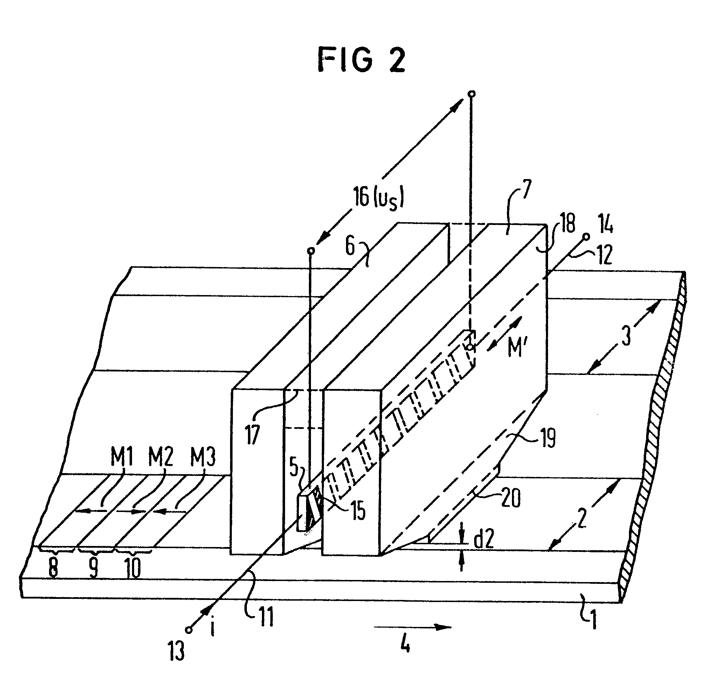

Das in Fig. 2 dargestellte Ausführungsbeispiel unterscheidet sich von Fig. 1 dadurch, daß die Länge des Streifens 5 die Breite der Informationsspur 2 übersteigt. Die Abschirmplatten 6, 7 weisen dabei drei Teile 18 bis 20 auf, von denen der erste Teil 18 eine Quaderform besitzt und in seiner Breite der Streifenlänge angepaßt ist. Der zweite Teil 19 verjüngt sich in seiner Breite in Richtung auf die Informationsspur 2 auf einen der Spurbreite entsprechenden Wert. Der dritte Teil 20 ist wieder quaderförmig ausgebildet und entspricht in seiner Breite der Informationsspur 2. Die untere Begrenzungsfläche des Teils 20 ist wieder möglichst weitgehend, d. h. bis auf den verbleibenden Abstand d2, der Informationsspur angenähert.

Bei einer derartigen Formgebung der Teile 6, 7 und der Überlänge des Streifens 5 in bezug auf die Breite der Informationsspur 2 findet eine Auffächerung der aus der Informationsspur aufgenommenen Magnetflüsse statt, wobei der Streifen 5 pro Längeneinheit mit einem wesentlich geringeren Magnetfluß beaufschlagt wird als das bei dem Sensor nach Fig. 1 der Fall ist. Unter der Annahme, daß die Länge des Streifens 5 der fünffachen Breite von Spur 2 entspricht, kann von ihm auch der fünffache Wert des von einem in seiner Länge der Spurbreite angepaßten Streifen maximal aufnehmbaren Magnetflusses verarbeitet werden. Das führt zu einem Sensorsignal $u_s$ der fünffachen Größe. Nimmt man wieder eine Sättigungsinduktion des Streifens 5 von $10^{-4}$ $Vs/cm^2$ an, so ergibt sich für eine Streifenlänge von 150 µm ein maximal aufnehmbarer Sättigungsfluß von $1,5 \times 10^{-11}$ Vs. Damit können die Magnetflüsse, die von allgemein verwendeten magnetischen Aufzeichnungsträgern, z. B. Eisenoxidträgern, herrühren, bis zu einer Dicke der informationstragenden Schicht von 4 µm eine Übersteuerung des Sensors voll ausgewertet werden.

Eine Vereinfachung der Ausführungsform nach Fig. 2 ergibt sich dadurch, daß die Teile 20 der Abschirmplatten 6, 7 weggelassen werden, wobei die Teile 19 mit ihren unteren Grenzflächen der Informationsspur 2 bis auf den Abstand d2 angenähert werden.

## Patentansprüche

1. Abgeschirmter magnetoresistiver Sensor zum Abtasten der Informationsspur (2) eines magnetischen Aufzeichnungsträgers (1), mit einem von einem konstanten Strom (i) durchflossenen Streifen (5) aus magnetoresistivem Material, der eine Magnetisierung (M') aufweist, mit einer senkrecht zu seiner Längsachse orientierten Streufeldinduktion der magnetischen Aufzeichnung (M 1—3) beaufschlagt wird und mit endseitigen Anschlüssen (16) zur Abgabe eines Sensorsignals ($U_s$) versehen ist, und mit zwei Abschirmplatten (6, 7) aus ferromagnetischen Material, die einen den Streifen (5) aufnehmenden Spalt zwischen sich begrenzen, wobei der Streifen (5) in einem vorgegebenen Abstand (d1 + d2) von der Informationsspur (2) angeordnet ist, während die Stirnseiten der Abschirmplatten (6, 7) der Informationsspur (2) möglichst weitgehend (d2) angenähert sind, dadurch gekennzeichnet, daß die Streifenlänge die Breite der Informationsspur (2) übersteigt und daß die Abschirmplatten (6, 7) jeweils aus einem ersten, quaderförmigen, in seiner Breite der Streifenlänge angepaßten Teil (18) und einem zweiten, sich auf die Spurbreite verjüngenden Teil (19) bestehen.

2. Abgeschirmter magnetoresistiver Sensor nach Anspruch 1, dadurch gekennzeichnet, daß die Abschirmplatten (6, 7) jeweils einen dritten quaderförmigen Teil (20) aufweisen, dessen Breite der Spurbreite angepaßt ist.

3. Abgeschirmter magnetoresistiver Sensor nach Anspruch 1, dadurch gekennzeichnet, daß die Abschirmplatten (6, 7) durch einen den Spalt abschließenden Steg (17) aus ferromagnetischem Material miteinander verbunden sind.

4. Abgeschirmter magnetoresistiver Sensor nach einem der vorhergehenden Ansprüche, dadurch gekennzeichnet, daß der Streifen (5) mit einer Mehrzahl von zueinander parallelen, zu seiner Längsachse unter einem vorgegebenen Winkel verlaufenden Leiterbahnen (15) versehen ist.

## Claims

1. A screened magneto-resistive sensor for scanning the information track (2) of a magnetic data carrier (1), having a strip (5), through which a constant current (i) flows and which is made of a magneto-resistive material and which has a magnetization (M'), is supplied with a stray field induction of the magnetic recording (M 1—3) and orientated at right angles to the longitudinal axis of said strip, which at the ends is provided with terminals (16) for transmitting a sensor signal (U$_S$), and having two screening plates (6, 7) which are made of a ferromagnetic material and delimit a gap, which houses the strip (5), between them, where the strip (5) is arranged at a predetermined distance (d1 + d2) from the information track (2), whereas the end faces of the screening plates (6, 7) approach the information track (2) as nearly (d2) as possible, characterized in that the strip length exceeds the width of the information track (2) and that the screening plates (6, 7) respectively comprise a first parallelepiped component (18), which is matched in its width to the strip length, and a second component (19) which tapers to the track width.

2. A screened magneto-resistive sensor as claimed in claim 1, characterized in that the screening plates (6, 7) respectively have a third parallelepiped component (20), whose width is matched to the track width.

3. A screened magneto-resistive sensor as claimed in claim 1, characterized in that the screening plates (6, 7) are mutually connected by a cross-piece (17) which seals the gap and comprises a ferro-magnetic material.

4. A screened magneto-resistive sensor as claimed in one of the preceding claims, characterized in that the strip (5) is provided with a plurality of conductor paths (15) which are parallel to one another and extend at a predetermined angle to the longitudinal axis of said strip.

## Revendications

1. Capteur magnétorésistif blindé pour la lecture de la piste d'information (2) d'un support d'enregistrement magnétique (1), comportant une bande (5) parcourue par un courant constant (i) et constituée en un matériau magnétorésistif qui possède une aimantation (M'), est chargée par un champ d'induction de dispersion, orienté perpendiculairement à l'axe longitudinal de la bande, du support magnétique (M 1—3), et est munie de bornes extrémité (16) servant à délivrer un signal (U$_S$) du capteur, et comportant deux plaques de blindage (6, 7) constituées en un matériau ferromagnétique qui délimitent entre elles une fente recevant la bande (5), cette dernière étant disposée à une distance prédéterminée (d1 + d2) de la piste d'information (2), tandis que les faces frontales des plaques de blindage (6, 7) sont aussi rapprochées que possible (d2) des plaques de blindage (6, 7), caractérisé par le fait que la longueur de la bande dépasse la largeur de la piste d'information (2) et que les plaques de blindage (6, 7) sont constituées respectivement par une première partie (18) de forme parallélépipèdique, dont la largeur est adaptée à la longueur de la bande, et par une seconde partie (19) dont la largeur se rétrécit jusqu'à celle de la piste.

2. Capteur magnétorésistif blindé suivant la revendication 1, caractérisé par le fait que les plaques de blindage (6, 7) possèdent respectivement une troisième partie de forme parallélépipédique (20), dont la largeur est adaptée à la largeur de la piste.

3. Capteur magnétorésistif blindé suivant la revendication 1, caractérisé par le fait que les plaques de blindage (6, 7) sont reliées entre elles par une barrette (17) fermant la fente et constituée en un matériau ferromagnétique.

4. Capteur magnétorésistif blindé suivant l'une des revendications précédentes, caractérisé par le fait que la bande (5) est munie d'une multiplicité de voies conductrices (15) parallèles entre elles et faisant un angle prédéterminé par rapport à l'axe longitudinal de la bande.

# FIG 1

# FIG 2